Europäisches Patentamt

European Patent Office

Office européen des brevets

(11) Publication number: **0 328 832**
**A2**

# EUROPEAN PATENT APPLICATION

(21) Application number: **88312267.3**

(22) Date of filing: **22.12.88**

(51) Int. Cl.⁴: **F16L 15/00**

(30) Priority: **24.12.87 GB 8730109**

(43) Date of publication of application:
**23.08.89 Bulletin 89/34**

(84) Designated Contracting States:
**AT DE ES FR GB IT NL**

(71) Applicant: **Quraishi, Abdul Hameed**
**"Viewfield" The Promenade**
**Wellingborough Northants(GB)**

(72) Inventor: **Quraishi, Abdul Hameed**
**"Viewfield" The Promenade**
**Wellingborough Northants(GB)**

(74) Representative: **Heath, Peter William Murray**
**FRY HEATH & CO. Seloduct House Station**
**Road**
**Redhill Surrey RH1 1PD(GB)**

(54) **Protectors for the ends of tubular elements.**

(57) The invention provides a protector, a protector element or a protector assembly for a pipe-end or a joint, the protector comprising a shaped body element or elements, shaped to mate generally in surface co-operation with the joint is additionally provided with at least one elastically deformable zone which is capable of being strained elastically upon or during the process of making-up of the protector on the joint, which zone is capable of being an interference fit in its elastically strained condition on the complimentary portion of the joint irrespective of any dimensional differences that may exist due to tolerances or deviations from nominal dimensions of the protector and the joint, whereby when the protector is made-up to its final position on the joint, sufficient elastic deformation is generated in the said zone due to the interference between the joint and the protector surfaces as to constitute a seal on the joint against the ingress of foreign bodies and/or corrosion promoting agents across the said zone and/or a barrier for the retention of grease or dope.

FIG 1

## PROTECTORS FOR THE ENDS OF TUBULAR ELEMENTS

This invention relates to protectors for the ends of tubular elements, male or female types and whether threaded or not. More particularly, the invention provides protectors for the joints made to the American Petroleum Institute specifications or other proprietary specifications such as Vam, Hydril etc. used in the oil, water well, mining and related industries.

Due to practical limitations of manufacturing processes, joints as well as protectors are made to commercially acceptable manufacturing tolerances and inaccuracies in their dimensions at the time of their manufacture. For many reasons, further dimensional changes may take place unpredictably during service. The unavoidable intrusion of such inaccuracies, although generally controlled to strict limits nevertheless results, in some protectors fitting badly or indifferently on some joints thereby impairing their efficiency as corrosion protection devices during service.

Consequently, heavy reliance is placed on the use of various dopes and greases to seal, protect and overcome the possible effects of badly fitting protectors. The use of such greases for prolonged corrosion protection service is generally inadequate. Periodic renewal of grease and inspection of tubulars is expensive and when carried out under adverse field conditions may even be counter productive.

Indeed, The American petroleum institute as well as most manufacturers of proprietary joints frequently lay down strict procedures and timing for re-doping and inspection which under some field conditions may be difficult or extremely expensive to carry out and monitor satisfactorily.

The present invention is aimed at improving the corrosion protection effectiveness of pipe-end protectors in spite of the commercially acceptable inaccuracies and tolerances inherent in all commercial manufacturing processes and varying service conditions for both the pipe-ends and their protectors. Another aim is to increase the effectiveness of applied greases and dopes. Yet another aim is to increase the grease sealing-in and retention capacity of pipe-end protectors so that there is synergy of protective action between the protectors and the greases per se. Other advantages and benefits will become apparent during the course of the following description of the invention and the manner in which it is to be carried out:-

According one aspect of the invention there is provided a shaped body element or elements constituting a protector or a protector assembly for a pipe-end and / or a joint, henceforth simply referred to as the protector and the joint respectively, the said protector, shaped to mate generally in surface co-operation with the joint, is additionally provided with at least one suitably sited and elastically deformable zone ( i.e. a region which is capable of being strained elastically upon or during the process of making-up of the protector on the joint ) which is capable of being an interference fit ( i.e. fit in its elastically strained condition ) on the complimentary portion of the joint irrespective of any dimensional differences that may exist due to the presence of technically and or commercially acceptable tolerances or deviations from the nominal dimensions of the protector and the joint, so that when any such protector is made-up to its final position on any such joint, sufficient elastic deformation is generated in the said zone due to the provision of the said interference between the joint and the protector surfaces so as to constitute a physical barrier to or a seal on the joint against the ingress of foreign bodies and/or corrosion promoting agents across the said zone.

According to another aspect of the invention, there is provided a protector as described above and further characterised in that during engagement ( i.e. before it is fully made up to its desired final position on the joint ) the protector is provided to have the said interference contact along at least one corresponding axially or radially symmetrical line or area on the joint and or optionally, partly on the joint and partly on the pipe body inwards of the joint, and which line / lines and or area / areas of contact on further engagement of the protector deform elastically, retaining residual energy of strain, the said sealing action being affected with the protector advanced to its final made-up position.

According to a third aspect of the invention, the said sealing action is further characterised by the provision and retention of sufficient residual energy of strain due to the said elastic deformation that a forceful contact pressure is obtained and or maintained between the joint and the protector to keep out the corrosion provoking agents from entering the joint area desired to be protected.

According to a fourth aspect of the invention the said seal is provided at least along the common peripheral boundary line and or region from which corrosion provoking agents may enter the joint area or areas desired to be protected.

According to a fifth aspect of the invention the said resilient interference or energy of elastic strain is provided and retained with time to a sufficient extent so that irrespective of any changes in the dimensions of either the joint or the protector due to environmental changes and or ageing in service, the said seal and or seals are maintained.

According to a sixth aspect of the invention there is provided an end protector according to any of the aspects of the invention stated above, the said protector being further characterised in that it is provided with a multiplicity of regions of stored elastic energy due to the said interference when the protector is made up fully on the joint.

According to a seventh aspect of the invention the protector, as provided above, is further characterised by the provision of the said seals in which the sealing action takes place simultaneously or preferably sequentially i.e. one seal being affected prior to other or others during the make-up process.

According to an eighth aspect of the invention, the said protector as provided above is further characterised by the provision of a space or spaces between the said surfaces for the entrapment of grease or dope around the joint and the said seals and when so greased or doped the grease or dope acting as an auxiliary corrosion prevention aid.

According to a ninth aspect of the invention the said grease traps / spaces are provided by the provision of a definite angle of contact between the sealing face / faces of the protector and the joint along their common outward interface /interfaces from which corrosion provoking agents may gain access to the joint.

Other aspects of the invention will become evident in the course of the following preferred descriptions and drawings which for the sake of clarity and understanding of the scope and nature of the invention are described in relation to a tapered joint in accordance with an API Spec. 5 B as well as in relation to a typical premium joint of the Vam type. For similar reasons the drawings and the descriptions are dealt with in suitably detailed portions.

In practice, the individual novel features described herein may be combined in a protector of this invention in any desired manner, sequence or extent. Further, it is to be understood that similar considerations apply to other types of joints as for example, the two step parallel threaded joints such as Hydril.

Any suitable materials of construction may be used in the practice of this invention. My British Patent no: 1,597, 711 refers to various materials and configurations of protectors which are equally applicable to this invention.

The invention is now described in some of its preferred forms by reference to diagrams so that those who are skilled in the art may appreciate the nature and the scope of the invention more clearly.

Figure 1 illustrates in section portions of a screw threaded pipe-end with an API 5B, Buttress pin type joint and an engaging pin end type protector detailing in magnified form various arrangements of the protector at the extremities of the joint.

figure 2 illustrates in section portions of a screw threaded. pipe-end with a Vam pin type joint and an engaging pin end protector detailing in magnified form various arrangements of the protector at the extremities of the joint.

Figure 3 illustrates in section portions of a screw threaded box-end or coupler API 5B buttress type joint and an engaging box type protector detailing in magnified form various arrangements of the protector at the extremities of the joint.

Figure 4 illustrates in section portions of a screw threaded box-end or coupler API 5B buttress type joint and an engaging box type protector showing in magnified forms various arrangements of the protector at the extremities of the joint.

Figure 5 illustrates in section portions of a screw threaded box-end or coupler Vam type joint and an engaging box type protector showing in magnified forms various arrangements of the thread protector at the inner seal and the outer coupler face.

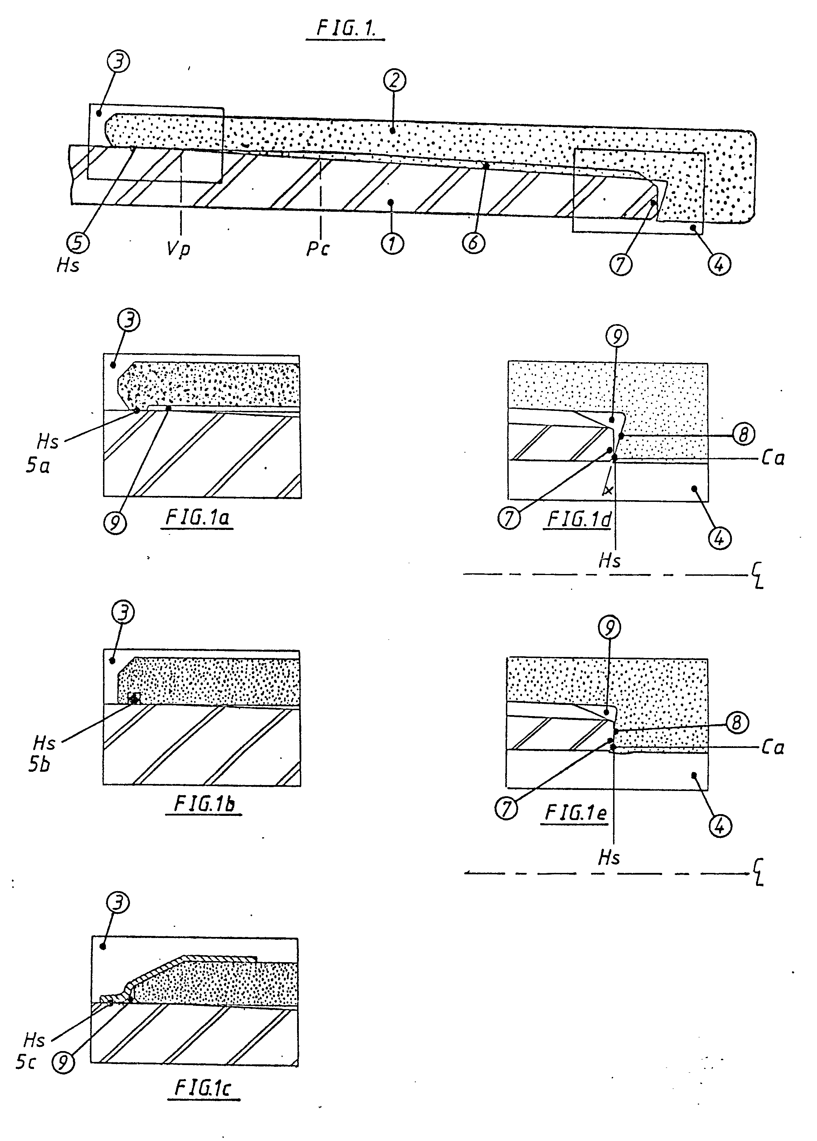

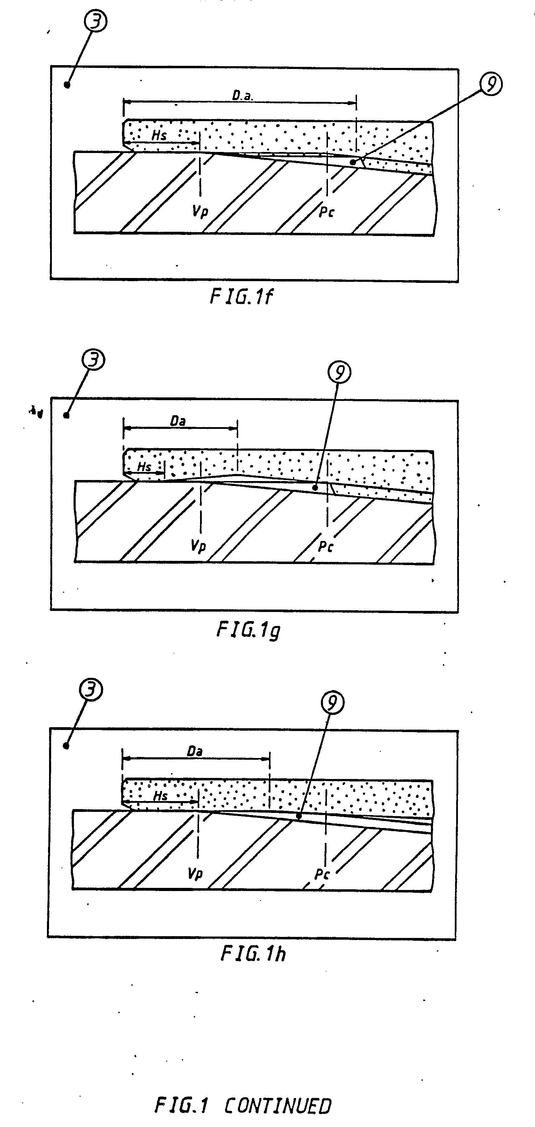

Referring now to the drawings, it is to be observed that in Figure 1 a pipe end 1 having external inclined and tapered threading 6 is provided with a mating protector 2. In the combination shown, the plane of thread vanish point Vp and the plane of perfect thread length Pc are illustrated as is an area 3 of the protector having a taper less than the joint taper. As provided by the invention, an area 5 Hs of hoop stress is provided at the extremity of the protector giving a resilient seal at this area between pipe and protector. As shown alternately in figures 1a, b and c the resilient seal can be enforced by an inwardly projecting shoulder Hs 5a at the tip of the protector itself, or complimented by means of an o-ring held within a groove Hs 5b in the end of the protector, or by means of a resilient band Hs 5c overlying and engaging both the outer wall of the end of the protector and of the pipe.

Grease traps 9 giving synergistic corrosion prevention, as provided by the invention, are shown in Figures 1a and c.

The arrangement of Figure 1f is similar to that of figure 1 except that the taper is zero, providing parallel sides to the protector from its tip up to the plane of perfect thread pitch pc. In this case a length Da from the tip of the protector shows the area of elastic deformation provided by the invention, as is the length Hs where hoop stress is provided to affect the seal. Again, the same alternate methods of providing a resilient seal at the tip of the protector can be provided as already shown in Figures 1a, b and c. Grease trap 9 is also shown between the protector and the threads.

Figure 1g likewise illustrates similar arrangement except that, in this case, area Da of the protector is provided with a taper reversed i.e. of a negative nature. Once again areas Da and Hs illustrate areas of elastic deformation and hoop stress in the protector affecting the seal and providing space 9 for the entrapment of the grease both in the run-out portion of the joint threads as well as the space created between the joint and the protector due to the provision of the negative taper.

Figure 1h likewise illustrates a similar arrangement as that of Figure 1g except that the negative taper angle is slightly different allowing the trapped grease 9 to be packed tight in the runout portion of the threads between Vp and Pc as the protector is advanced to its fully tight position on the joint.

referring now to Figures 1d and e showing details of area 4 at the pin end of the joint where the pin face 7 of the buttress joint are square with respect to the pipe axis, as shown, it is to be observed that the corresponding face 8 of the protector is provided at an angle x to the pin-end face of the joint so that during the make-up of the protector the initial sealing action takes place on a line at the periphery of the joint, as provided by the invention, and providing grease trap 9 at the tip of the joint as the compressive axial deformation Ca and the radial hoop stress Hs build up during the make-up of the protector to its final made-up position on the joint.

Arrangement shown in Figure 1e is similar to that of Figure 1d except that at the final made-up position of the protector sufficient reserve elastic deformation has been provided so that irrespective of any dimensional changes that may take place during service due to climatic or other changes, the elastic seal at the boundary of the joint and the protector against the ingress of foreign bodies or corrosion provoking agents is nevertheless maintained, according to the provisions of the invention.

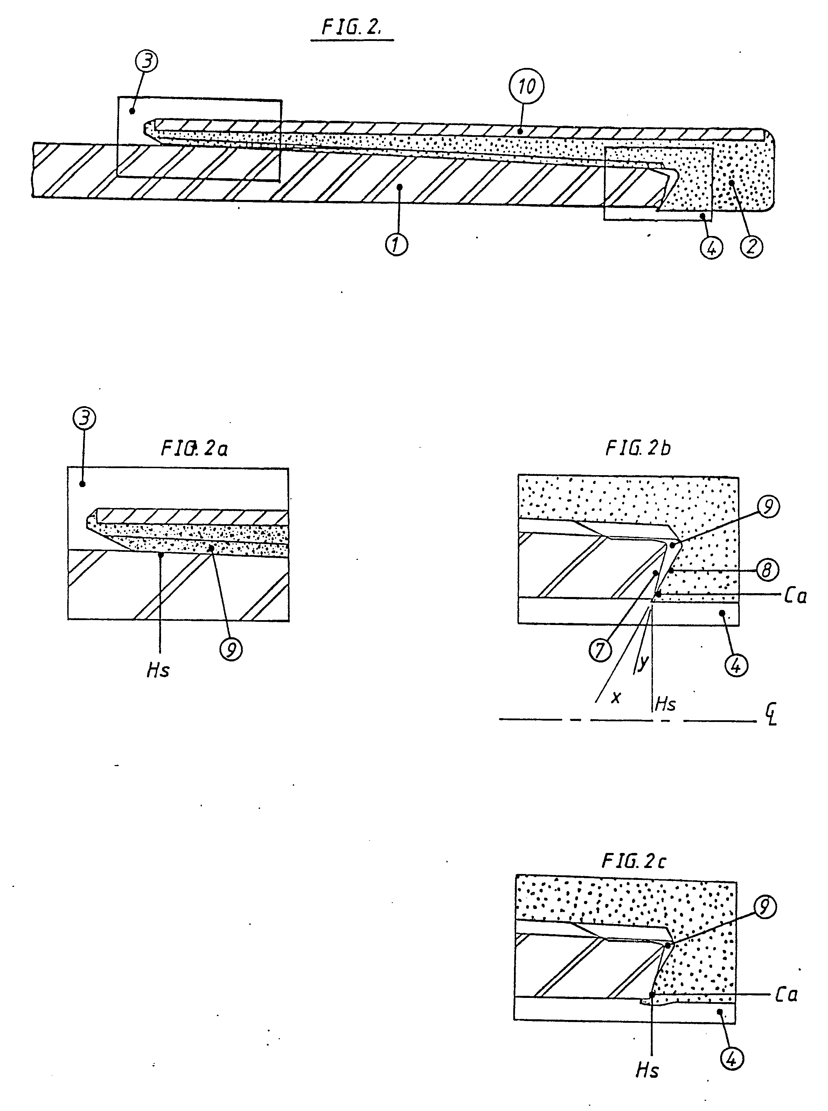

Referring now to figure 2, and 2a, there is illustrated in section portions a Vam pin type joint 1 and a steel / Epoxy urethane composite protector 2 in mating co-operation therewith, in accordance with my British Patent 1,597,711 already referred. Here, due to the presence of the steel jacket 10, the deformation capability at the tip of the protector is rather limited. It is to be observed that enhanced deformation ability, sufficient for the purposes of this invention is provided at the periphery of the joint and or the pipe body inwards of the joint by the progressive increase in the hoop stress Hs provided in the threaded profile on the inside surface of the protector ( shown as an enlargement of area 3, in Figure 2a ) as area 9 ( where the grease is also packed for additional security against the ingress of corrosion provoking elements ) as the protector is made-up to its final position on the joint.

Figure 2b and c both illustrate similar arrangements at the pin end of the vam joint as are already shown in figures 1d and e already discussed. It is to be observed, however that the pin nose 7 of the vam joint is inclined at a cone angle of 90 minus y degrees with respect to the pipe axis whereas the angle provided at the corresponding face 8 of the protector is 90 minus x, a figure measurably different than y, as shown, so that according to the invention, there is provided an initial conical contact at the inner periphery of the joint, also providing entrapping ability for the grease in the area 9, as shown, so that as the engagement of the protector increases on the joint a positive conical seal is progressively obtained by the provision of the compressive strain Ca and hoop strain Hs, as shown, until there is provided sufficient reserve elastic strain in the protector face 8 so as to maintain the seal even under adverse conditions of service, as illustrated in Figure 2c.

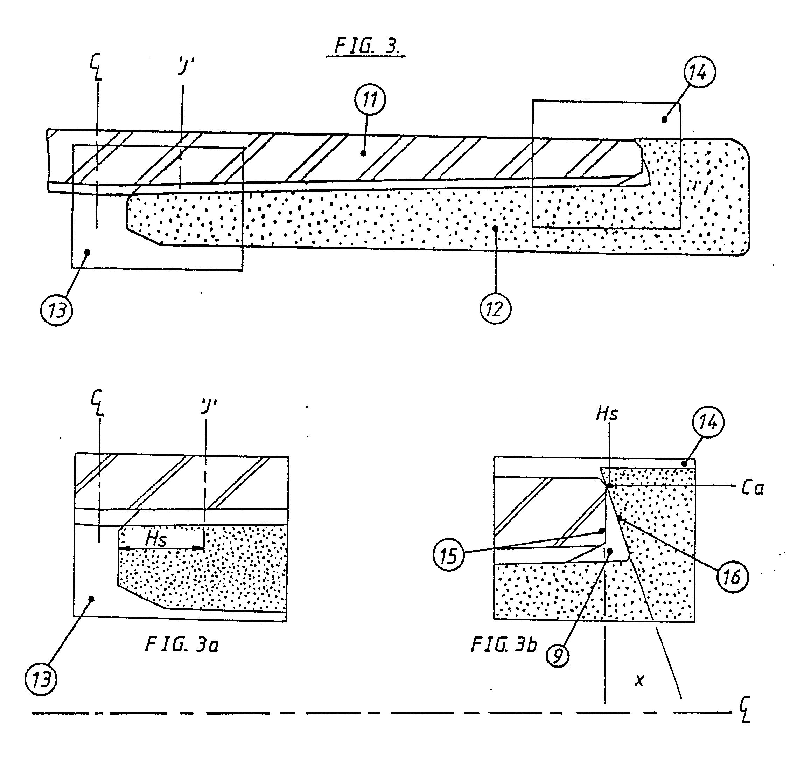

Referring now to Figure 3, there is shown a box end joint 11 to an API 5B specification which is typically made without any inner sealing shoulder in the "J" area i.e. in the central part of a dual threaded coupling and a protector 12, according to the invention. The protector is shown made up to its final position on the joint. Areas 13 and 14 show the disposition of the end elements of the protector in enlarged forms as Figure 3a and 3b. It is to be observed that the necessary sealing interference, according to the invention, is provided on the inner portion of the joint's "J" area i.e. an area beyond the effective usable portion of the joint by the provision of the hoop stress Hs provided on the inner extremity of the protector. It is to be noted that similar arrangements as are already illustrated for the pin end in Figure 1 , 1a, 1b, 1c, 1f, 1g and 1h, in accordance with the invention, could also be provided.

Referring now to the enlargement 14 of the box end face 15, as shown in Figure 3b, it is to be observed that the sealing angle on the face 16 of the protector corresponding to the face 15 is at an angle of 90 plus x with respect to the pipe axis whereas the face 15 of the box end is at right angle to the pipe axis. The peripheral sealing of the joint at its face 15 is accomplished by the provision of the protector face first contacting the outer circular portion of the box end face 15, as shown, where Hs and Ca are the radial and axial sealing forces, provided by the invention, as the protector is made-up to its final position on the joint. The grease trap 9 is provided by the provision of the angle x between the box end face 15 and the protector face 16.

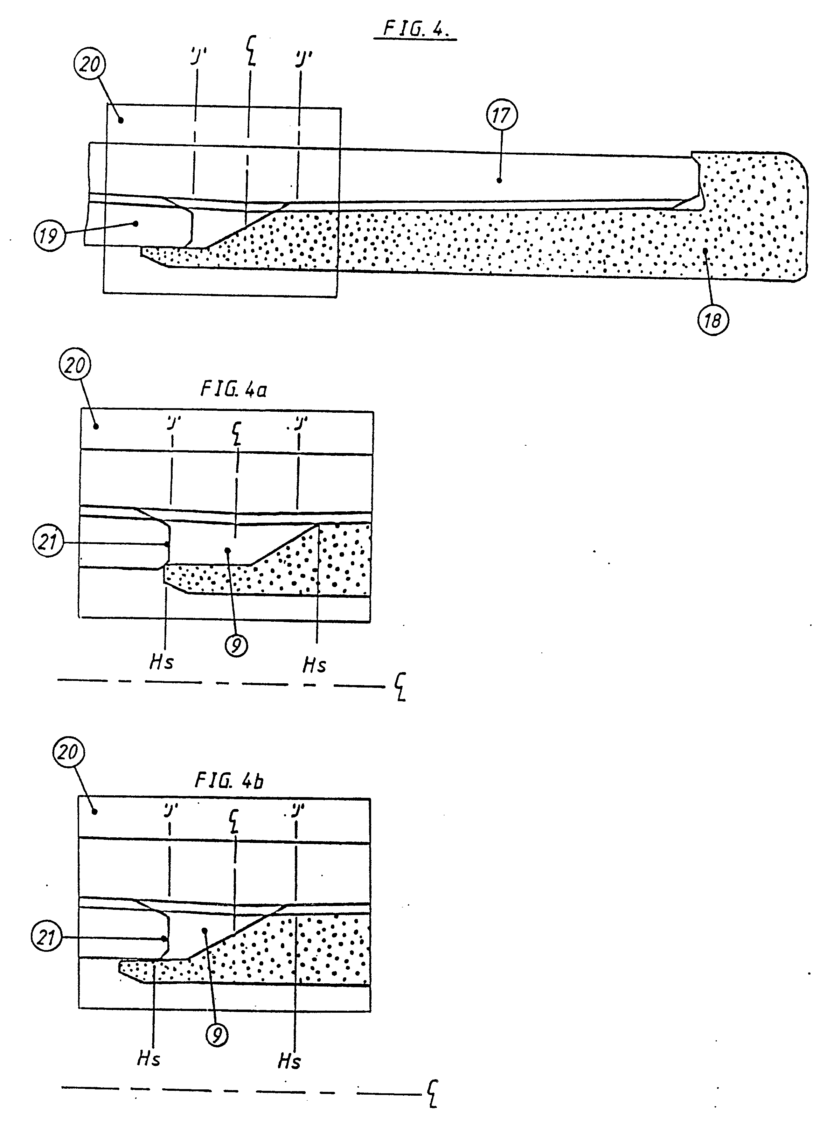

Referring now to Figure 4 there is illustrated an API coupling 17 together with its mating protector 18 which is not only extended into the "J" area of the ' outer ' box joint of the coupling as shown in Figure 3 but extends also into the "J" area of the pipe-ward part of the coupling to which the pin end joint 19 of the pipe is already screwed. The sealing hoop stresses Hs and a space for the provision of sealing grease is shown between the 'J' to 'J' area as shown in Figures 4a and b.

Figure 4a shows the interference Hs generated by the protector at the coupling surfaces inwards of the box end joint desired to be protected and also at the "J" area outwards of the pipe end providing a multiplicity of seals, as provided by the invention when the said hoop stress Hs is provided in a manner illustrated in Figure 3a

Figure 4b is very similar to fig 4a except that a greater degree of energy of deformation is provided to enable the seals to be maintained intact when the joint is exposed to varying degrees of ambient temperature resulting in differential expansion of the protector element relative to the pipe end

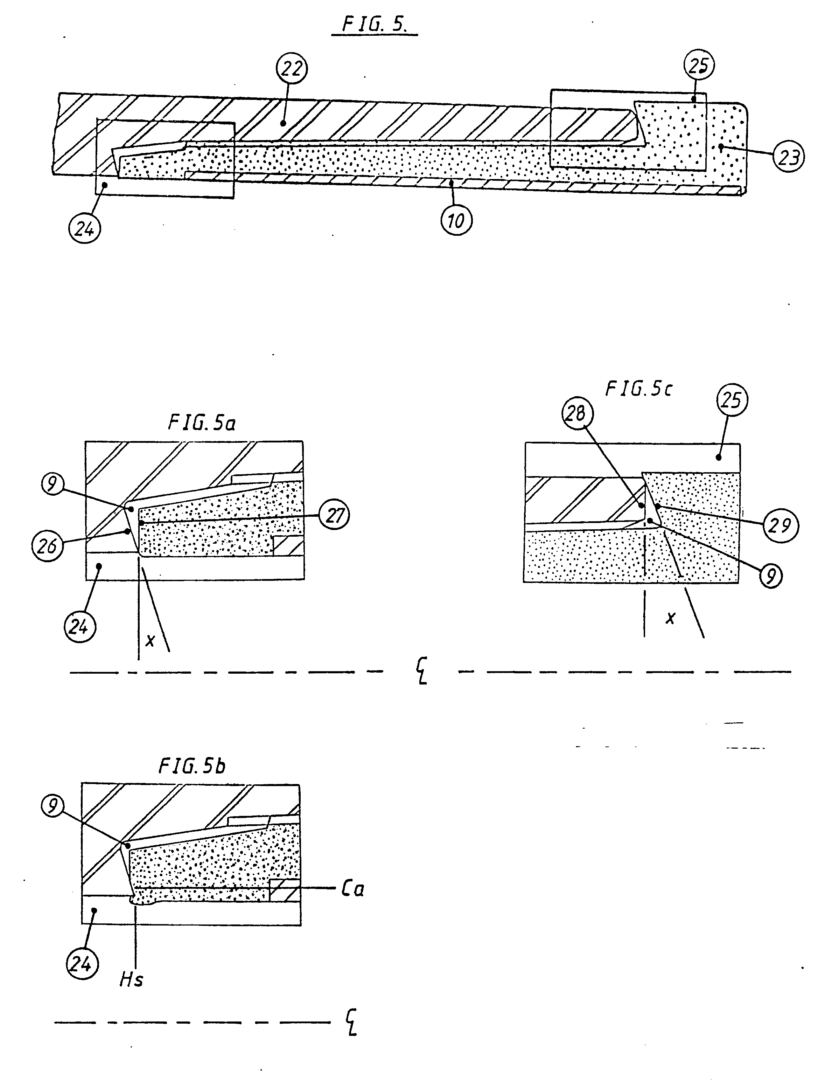

Referring now to Figure 5, 5a, b and c there is illustrated a box end of vam type joint. Figure 5a and b show the protector 23 in sealing mating co-operation with the box end 22 showing the inner seal of the box end protected by the elastic energy stored in the tip of the corresponding part of the protector as shown by the deformation at the line of contact on the inner extremity of the box end seal, in Figure 5a and b. It is to be observed that this seal is functionally equivalent to the seal already discussed in Figure 3b except that in this case the inner vam component seal face 26 is at a conical angle of 90 plus x degrees with respect to the pipe axis and the protector seal face 27 is at right angles to the joint axis.

Figure 5c illustrates a seal identical to the seal already discussed in figure 3b for an API joint except that in this case the two seals shown in figures 5b and 5c make sequentially, the inner seal on face 24 making ahead of the seal on face 28, as provided by the invention. This feature ensures that if on visual inspection the outer seal is found to have been made, there is positive assurance that the inner seal would also have been made.

## Claims

A protector or a protector element or a protector assembly for a pipe-end or a joint henceforth referred to simply as the protector and the joint respectively:-

1. the protector comprising a shaped body element or elements, shaped to mate generally in surface co-operation with the joint is additionally provided with at least one suitably sited and elastically deformable zone ( i.e. a region which is capable of being strained elastically upon or during the process of making-up of the protector on the joint ) which is capable of being an interference fit ( i.e. fits in its elastically strained condition ) on the complimentary portion of the joint irrespective of any dimensional differences that may exist due to the presence of technically and or commercially acceptable tolerances or deviations from the nominal dimensions of the protector and the joint, so that when any such protector is made-up to its final position on any such joint, sufficient elastic deformation is generated in the said zone due to the provision of the said interference between the joint and the protector surfaces so as to constitute a physical barrier to or a seal on the joint against the ingress of foreign bodies and/or corrosion promoting agents across the said zone and or a barrier for the retention of grease or dope.

2. A protector for a joint, comprising a shaped body, shaped generally to mate in surface co-operation with the joint, the said shaped body additionally provided with at least one suitably deformable zone therein which is capable of interference fit on the complimentary portion of the joint across which the ingress of foreign bodies or corrosive elements is desired to be prevented, the magnitude of the said interference provided being substantially equal to or measurably greater than the total permissible cumulative mis-match or differences in dimensions that could exist in the said zone as a result of commercially acceptable and or other bonafide range of specified tolerances for any pipe-end and any protector so manufactured, the said deformable zone being further characterised by the presence of a sensible pressure in the area of the said interference contact between the protector and the joint forming a pressure activated seal against the ingress of foreign bodies or corrosion provoking agents when the protector is fitted to its desired final position on the joint, the deformable zone providing pockets for the retention of corrosion combating materials.

3. A protector for a joint, the protector comprising a shaped body, shaped generally to mate in surface co-operation with the joint, the said shaped body additionally provided with at least one suitably deformable zone therein which is capable of interference fit on the complimentary portion of the joint across which the ingress of foreign bodies or corrosive elements is desired to be prevented, the magnitude of the said interference capability provided being substantially equal to or measurably greater than the total permissible cumulative mis-match or differences in dimensions that may exist in the said zone as a result of commercially acceptable and or other bonafide range of specified tolerances for any joint and any protector so manufactured, the said deformable zone being further characterised in that the deformation or strain produced therein when the said protector is made up to its final sealing position on the joint is still at least of substantially elastic a nature so that the deformed zone recovers to substantially its original dimensions upon removal of the protector from the said joint.

4. A protector as claimed in any or the claims above and further characterised in that during its engagement on the joint ( i.e. before it is fully made-up to its desired final position ) it is capable of making an interference contact along at least one corresponding axially and or radially symmetrical line and or area on the joint.

5. A protector according to any of the claims above wherein the interference contact results in sealing pressure being exerted on the joint, the protector characterised by the provision of variable contact pressure with increasing engagement of the protector on the joint.

6. A protector according to claim 5 above and further characterised by the provision of increasing contact pressure with increasing engagement of the protector on the joint.

7. A protector according to any of the claims above wherein there is provided a multiplicity of the said zones of interference leading to the provision of more than one seal for the retention of grease and or for the prevention of the ingress of corrosive elements when the protector is made up on the joint.

8. A protector according to any of the above claims wherein the said interference in at least one of the said zones is of sufficient magnitude so that there is provided at least one seal on the joint across which the ingress of foreign bodies or corrosion provoking elements, even if they may be driven under pressure, would be resisted with effective sealing force when the protector is made-up fully on the joint.

9. A protector according to any of the above claims wherein the sealing of the joint takes place in more than one zone of interference, the said sealing actions taking place nominally simultaneously as the protector is made-up to its final position on the joint.

10. A protector according to any of the claims from 1. to 6. above wherein the sealing of the joint takes place in more than one zone of interference, the said sealing actions taking place sequentially in any desired order as the protector is made-up to its final position on the joint.

11. A protector in accordance with any of the claims above wherein the said zone or zones of interference, during the act of making-up the protector to its desired final position on the joint, result in the provision of grease or dope entrapment spaces which may act as auxiliary corrosion protection measures.

12. A protector according to any of the above claims where the sealing zone taper on the protector is provided so that it is different than the taper on its corresponding surface on the joint and or the pipe body.

13. A protector according to any one of the claims above where an inward an inward projecting shoulder at the protector element extremity which in contact with the joint and or pipe body at the boundary of the joint provides enhanced sealing force to the region and optionally provides a cavity for the retention of grease or dope.

14. A protector according to any of the claims above where an o-ring element is provided in contact with both the protector and the joint or the pipe body enhancing the sealing action by the provision of elastic deformation in thee o-ring when the protector is made up to its final position on the joint.

15. A protector according to any of the claims above wherein an elastic sealing band element is provided which is simultaneously in contact with the protector exterior surface and the joint exterior surface so that there the said elastic bad is under hoop stress with the protector made up to its final position on the joint and or the pipe body.

16. A protector according to any of the claims above where a sealing zone and or grease retention zone is provided by the peripheral interference fit between the surface of the pipe body outwards of the joint and the protector extremity.

17. A protector according to any of the claims above when assembled to its made-up position on any joint, pipe end or a tubular element.

18. A protector according to any of the above claims whereby a cavity is formed for the retention of grease for enhancing the anticorrosion performance of protectors.

FIG. 1.

FIG.1a

FIG.1b

FIG.1c

FIG.1d

FIG.1e

FIG.1f

FIG.1g

FIG.1h

FIG.1 CONTINUED

FIG. 2.

FIG. 2a

FIG. 2b

FIG. 2c

FIG. 3.

FIG. 3a

FIG. 3b

FIG. 4.

FIG. 4a

FIG. 4b

# FIG. 5.

## FIG. 5a

## FIG. 5c

## FIG. 5b